# EUROPEAN PATENT APPLICATION

(11) **EP 2 796 741 A1**
(43) Date of publication of application: **29.10.2014**
(21) Application number: 11878143.4
(22) Date of filing: 22.12.2011
(51) Int. Cl.: F16D 13/64, F16F 15/121

(54) **TORSIONAL VIBRATION DAMPENING DEVICE**

(71) Applicant: Toyota Jidosha Kabushiki Kaisha, Toyota-shi, Aichi 471-8571 (JP)
(72) Inventor: WATARAI, Shinichiro, Toyota-shi Aichi 471-8571 (JP); YOSHIDA, Takatsu, Toyota-shi Aichi 471-8571 (JP); KATAOKA, Yuuki, Toyota-shi Aichi 471-8571 (JP)
(74) Representative: Smith, Samuel Leonard
(86) International application number: PCT/JP2011/007200
(87) International publication number: WO 2013/093980

(57) **Abstract**

Providing a torsional vibration damping device capable of increasing torsional stiffness without increasing elastic members in the radius direction. In the torsional vibration damping device 1, a spring seat 16 for holding an end portion 4a of a coil spring 4 is provided between the other end 19b of an arm member 19 and the coil spring 4, and the spring seat 16 which contacts the other end 19b of the arm member 19 is constituted of a tapered face 16a.

## Description

### TECHNICAL FIELD

The present invention relates to a torsional vibration damping device, and more particularly to a torsional vibration damping device in which a first rotary member and a second rotary member are connected rotatably relative to each other via a torque transmission member and an elastic member so that a rotational torque is transmitted between the first rotary member and the second rotary member.

### BACKGROUND ART

Since conventionally, a driving source such as an internal combustion engine or an electric motor and wheels or the like are connected to each other via a driving power transmission system having a transmission or the like to transmit a driving power from the driving source to the wheels via the driving power transmission system. However, in the driving power transmission system connected to the driving source, clanking noise and booming noise occur due to torsional vibration induced by rotational fluctuation originating from the torque fluctuation of the internal combustion engine, for example.

The clanking noise is abnormal clanking sound which occurs when a pair of idling gears of speed change gear pairs make contact with each other due to torsional vibration induced by the rotational fluctuation originating from the torque fluctuation of the internal combustion engine. Further, the booming noise is abnormal sound which is generated inside a vehicle compartment due to vibration originating from torsional resonance of the driving power transmission system based on the torque fluctuation of the internal combustion engine and, for example, exists in the steady range.

Since conventionally, there has been known a torsional vibration damping device which connects the driving source such as the internal combustion engine or the electric motor to the wheels or the like so as to transmit the rotational torque from the driving power source and absorbs torsional vibration between the driving source and the driving power transmission system having the speed change gear pairs (see PATENT DOCUMENT 1, for example).

The torsional vibration damping device includes: a cam portion which has a cam surface on its outer periphery and is configured so that the curvature of the cam surface changes along the circumferential direction; a disk plate which is provided on the same axis as the cam portion and freely rotatable relative to the cam portion; and an elastic member which is provided between the cam portion and the disk plate and elastically deformed when the cam portion and the disk plate rotate relative to each other.

The torsional vibration damping device further includes an arm member in which an end thereof is in contact with the cam surface of the cam portion while the other end is urged by the elastic member and which, when the cam portion and the disk plate rotate relative to each other, rotates around a rotary shaft provided on the disk plate so as to deform the elastic member elastically to transmit the rotational torque between the cam portion and the disk plate.

In this torsional vibration damping device, when the cam portion rotates, the arm member swings to deform the elastic member elastically so that the range of the torsion angle between the cam portion and the disk plate can be increased.

As a result, the torsional stiffness between the cam portion and the disk plate can be entirely reduced so that the clanking noise and the booming noise can be damped to improve the vibration damping performance.

### PRIOR ART DOCUMENT

### PATENT DOCUMENT

PATENT DOCUMENT 1: WO2011/067815

### SUMMARY OF THE INVENTION

### PROBLEM TO BE SOLVED BY THE INVENTION

However, in such a conventional torsional vibration damping device, because the arm member rotates around a rotary shaft provided on the disk plate so as to deform the elastic member elastically, when the cam member and a pair of the disk plates rotate relative to each other, the other end portion of the arm member receives a reaction force in the circumferential direction from the elastic member while being displaced in the radius direction of the disk plate.

Thus, the arm member cannot deform the urging member in the circumferential direction just by an amount corresponding to movement of the other end portion of the arm member in the radius direction. Thus, the arm member cannot receive a large reaction force along the circumferential direction from the elastic member, so that the torsional vibration damping device cannot generate a large torsional stiffness, which is a problem which should be solved for improvement.

In order to increase the torsional stiffness of the torsional vibration damping device by increasing the stiffness of the elastic member, it can be considered to enlarge the elastic member in the radius direction. In this case, however, because a large elastic member in the radius direction is mounted on the disk plate, it comes that the disk plate is enlarged in the radius direction. Thus, there occurs a problem that the torsional vibration damping device is enlarged.

The present invention has been achieved to solve the above-described conventional problem and intends to provide a torsional vibration damping device capable of increasing the torsional stiffness without enlarging the elastic member in the radius direction.

### MEANS FOR SOLVING THE PROBLEM

To achieve the above-described object, the torsional vibration damping device of the present invention includes: a first rotary member; a second rotary member provided on the same axis as the first rotary member; at least one elastic member which is provided between the first rotary member and the second rotary member and, when the first rotary member and the second rotary member rotates relative to each other, is elastically deformed in the circumferential direction of the first rotary member; a cam member which is provided on the first rotary member and rotates integrally with the first rotary member; a torque transmission member which is provided rotatably on the second rotary member, in which an end portion thereof contacts a cam surface of the cam member while the other end portion is urged by the elastic member and which elastically deforms the elastic member so as to transmit rotational torque between the first rotary member and the second rotary member when the first rotary member and the second rotary member rotate relative to each other; and a holding member which is interposed between the other end portion of the torque transmission member and the elastic member and holds the end portion of the torque transmission member side of the elastic member, wherein the contact surface of the holding member which contacts the other end portion of the torque transmission member is configured of a tapered face inclined with respect to the circumferential direction of the first rotary member.

In this torsional vibration damping device, the torque transmission member is provided rotatably on the second rotary member, and an end portion of the torque transmission member contacts the cam surface of the cam member while the other end portion is urged by the elastic member, and the elastic member is elastically deformed when the first rotary member and the second rotary member rotate relative to each other. Thus, with a rotation of the cam member, the cam member presses the elastic member via the torque transmission member to change a reaction force from the elastic member to the torque transmission member. As a result, the range of a torsion angle between the first rotary member and the second rotary member is increased to transmit the rotational torque between the first rotary member and the second rotary member.

Thus, the torsional stiffness between the rotary member and the cam member can be entirely decreased thereby damping the torsional vibration.

Further, in the torsional vibration damping device, the holding member for holding the end portion of the torque transmission member side of the elastic member is provided between the other end portion of the torque transmission member and the elastic member, and the contact surface of the holding member which contacts the other end portion of the torque transmission member is configured of the tapered face inclined with respect to the circumferential direction of the first rotary member. Thus, when the other end portion of the torque transmission member is displaced in the radius direction, the other end portion of the holding member moves along the tapered face.

Thus, displacement in the radius direction of the other end portion of the torque transmission member is converted to displacement in the circumferential direction via the holding member, so that the elastic member is urged largely in the circumferential direction by the torque transmission member and a reaction force applied to the torque transmission member from the elastic member is increased. Accordingly, the torsional stiffness of the torsional vibration damping device can be increased by increasing the stiffness of the elastic member without enlarging the elastic member in the radius direction. As a result, enlargement of the torsional vibration damping device can be prevented.

Preferably, the tapered face of the holding member of the torsional vibration damping device may have a predetermined curvature.

Because the torsional vibration damping device is configured so that the tapered face of the holding member has a predetermined curvature, when the other end portion of the torque transmission member is displaced in the radius direction, the displacement amount of the holding member in the circumferential direction can be changed depending on the curvature of the tapered face of the holding member which the other end portion of the torque transmission member contacts.

For example, if the curvature of the tapered face of the holding member is set to a curvature which increases from outward in the radius direction of the first rotary member to inward in the radius direction, in a region in which the relative rotation between the first rotary member and the second rotary member is small, that is, in a region in which the torsion angle between the first rotary member and the second rotary member is small, the curvature of the tapered face which the other end portion of the torque transmission member contacts is small.

Because, at this time, the other end portion of the torque transmission member contacts the tapered face having the small curvature and is displaced in the radius direction, the displacement of the other end portion of the torque transmission member in the radius direction is converted by a small amount to displacement in the circumferential direction of the elastic member. Thus, in a low torque region in which the torsional stiffness between the first rotary member and the second rotary member is small, the torsional stiffness can be reduced.

On the other hand, in a region in which the torsion angle between the first rotary member and the second rotary member is large, the curvature of the tapered face which the other end portion of the torque transmission member contacts is large. At this time, because the other end portion of the torque transmission member contacts the tapered face having a large curvature and is displaced in the radius direction, the displacement in the radius direction of the other end portion of the torque transmission member is converted largely to displacement in the circumferential direction of the elastic member. Therefore, in a high torque region in which the torsional stiffness between the first rotary member and the second rotary member is large, the torsional stiffness can be increased.

Preferably, the tapered face of the torsional vibration damping device may be configured so that the predetermined curvature is set such that the curvature increases from outward in the radius direction of the first rotary member to inward in the radius direction.

In this torsional vibration damping device, because the curvature of the tapered face of the holding member is set to the predetermined curvature which increases from outward in the radius direction of the first rotary member to inward in the radius direction, the torsional stiffness can be decreased in the low torque region in which the torsional stiffness between the first rotary member and the second rotary member is small, and, in the high torque region in which the torsional stiffness between the first rotary member and the second rotary member is large, the torsional stiffness can be increased.

Preferably, the torsional vibration damping device may be configured so that a first roller element which contacts the cam surface of the cam member is provided rotatably at an end portion of the torque transmission member and a second roller element which contacts the tapered face of the holding member is provided rotatably at the other end portion of the torque transmission member.

Because this torsional vibration damping device is configured so that a first roller element which contacts the cam surface of the cam member is provided rotatably at the end portion of the torque transmission member, the end portion of the torque transmission member can be made to slide along the cam surface of the cam member via the first roller element. Thus, contact resistance between the end portion of the torque transmission member and the cam surface of the cam member can be reduced to prevent the end portion of the torque transmission member and the cam surface of the cam member from being worn.

Further, because this torsional vibration damping device is configured so that a second roller element which contacts the tapered face of the holding member is provided rotatably at the other end portion of the torque transmission member, the other end portion of the torque transmission member can be made to slide along the tapered face of the holding member via the second roller element. Thus, the contact resistance between the other end portion of the torque transmission member and the tapered face of the holding member can be reduced so as to prevent the other end portion of the torque transmission member and the tapered face of the holding member from being worn. As a result, the durability of the cam member, the holding member and the arm member can be improved.

Preferably, in the torsional vibration damping device, the first rotary member includes the cam member on an outer periphery, and a boss member to which an input shaft of a transmission of a driving power transmission system is connected on an inner periphery, the second rotary member includes a pair of disk plates which are arranged on both sides in an axial direction of the second rotary member, which are fixed to each other with a predetermined gap in the axial direction and to which the rotational torque of an internal combustion engine is transmitted, the torque transmission member is constituted of an arm member provided rotatably on the rotary shaft which connects the pair of the disk plates to each other, and an accommodating hole for accommodating the elastic member and the holding members is formed in each of the pair of the disk plates.

In this torsional vibration damping device, the first rotary member includes the boss member to which the input shaft of the transmission of the driving power transmission system is connected and the rotational torque of the internal combustion engine is transmitted to the second rotary member. Thus, in a region in which the torsion angle between the first rotary member and the second rotary member is small like when the shift position is changed to neutral so that the internal combustion engine is idling, fine torsional vibration can be damped by means of the elastic member having a low stiffness, thereby suppressing generation of rattling sound.

In the meantime, the rattling sound is an abnormal rattling sound which is generated by collision of a pair of unloaded gears due to the torsional vibration originating from the rotational fluctuation due to the torque fluctuation of the driving when the shift position is changed to neutral so that the internal combustion engine is idling.

Further, in the region in which the torsion angle between the first rotary member and the second rotary gear is large, a large torsional vibration can be damped with the elastic member having a high stiffness by increasing the torsion angle between the first rotary member and the second rotary member.

Therefore, by damping the large torsional vibration originating from the rotational fluctuation due to the torque fluctuation of the internal combustion engine and torsional resonance of the driving power transmission system, the generation of the clanking noise which occurs when a pair of idling gears of speed change gear pairs collides with each other and the booming noise due to torsional resonance of the driving power transmission system can be suppressed.

Preferably, in the torsional vibration damping device, the accommodating hole may be accommodated in the accommodating hole which is curved along the circumferential direction of the first rotary member and the elastic member is constituted of a coil spring which may be curved along the accommodating hole in a natural condition.

Because, in this torsional vibration damping device, the elastic member is constituted of a coil spring which is curved along the accommodating hole in the natural condition, when displacement in the radius direction of the other end portion of the torque transmission member is converted to displacement in the circumferential direction via the holding member, the elastic member can be urged largely in the circumferential direction by means of the torque transmission member and the reaction force applied from the elastic member to the torque transmission member can be increased efficiently.

### EFFECT OF THE INVENTION

The present invention can provide a torsional vibration damping device capable of increasing the torsional stiffness without enlarging the elastic member in the radius direction.

### BRIEF DESCRIPTION OF DRAWINGS

[FIG. 1] FIG. 1 is a diagram illustrating a first embodiment of the torsional vibration damping device of the present invention or a front view of the torsional vibration damping device.
[FIG. 2] FIG. 2 is a diagram illustrating the first embodiment of the torsional vibration damping device of the present invention or a sectional view taken along the line A-A of FIG. 1.
[FIG. 3] FIG. 3 is a diagram illustrating the first embodiment of the torsional vibration damping device of the present invention or a sectional view taken in the direction of line B of FIG. 2.
[FIG. 4] FIG. 4 is a diagram illustrating the first embodiment of the torsional vibration damping device of the present invention or a sectional view taken in the direction of line C of FIG. 2.
[FIG. 5] FIG. 5 is a diagram illustrating the first embodiment of the torsional vibration damping device of the present invention or a front view of the torsional vibration damping device when the torsion angle between the disk plate and the boss is +30°.
[FIG. 6] FIG. 6 is a diagram illustrating the first embodiment of the torsional vibration damping device of the present invention or a front view of the torsional vibration damping device when the torsion angle between the disk plate and the boss is +70°.
[FIG. 7] FIG. 7 is a diagram illustrating the first embodiment of the torsional vibration damping device of the present invention or a front view of the torsional vibration damping device when the torsion angle between the disk plate and the boss is +90°.
[FIG. 8] FIG. 8 is a diagram illustrating the first embodiment of the torsional vibration damping device of the present invention or a front view of the torsional vibration damping device when the torsion angle between the disk plate and the boss is -45°.
[FIG. 9] FIG. 9 is a diagram illustrating the first embodiment of the torsional vibration damping device of the present invention or a diagram showing the relationship between the torsion angle and the torque of the torsional vibration damping device.
[FIG. 10] FIG. 10 is a diagram illustrating a second embodiment of the torsional vibration damping device of the present invention or a front view of the torsional vibration damping device.
[FIG. 11] FIG. 11 is a diagram illustrating the second embodiment of the torsional vibration damping device of the present invention or a major structural diagram of a spring seat and the other end of the arm member.
[FIG. 12] FIG. 12 is a diagram illustrating the second embodiment of the torsional vibration damping device of the present invention or a front view of the torsional vibration damping device when the torsion angle between the disk plate and the boss is +30°.
[FIG. 13] FIG. 13 is a diagram illustrating the second embodiment of the torsional vibration damping device of the present invention or a front view of the torsional vibration damping device when the torsion angle between the disk plate and the boss is +70°.
[FIG. 14] FIG. 14 is a diagram illustrating a third embodiment of the torsional vibration damping device of the present invention or a front view of the torsional vibration damping device.
[FIG. 15] FIG. 15 is a diagram illustrating the third embodiment of the torsional vibration damping device of the present invention or a top view of the arm member.
[FIG. 16] FIG. 16 is a diagram illustrating the third embodiment of the torsional vibration damping device of the present invention or a sectional view taken along the line D-D of FIG. 15.

### MODES FOR CARRYING OUT THE INVENTION

Hereinafter, the embodiments of the torsional vibration damping device of the present invention will be described using the drawings.

### (First embodiment)

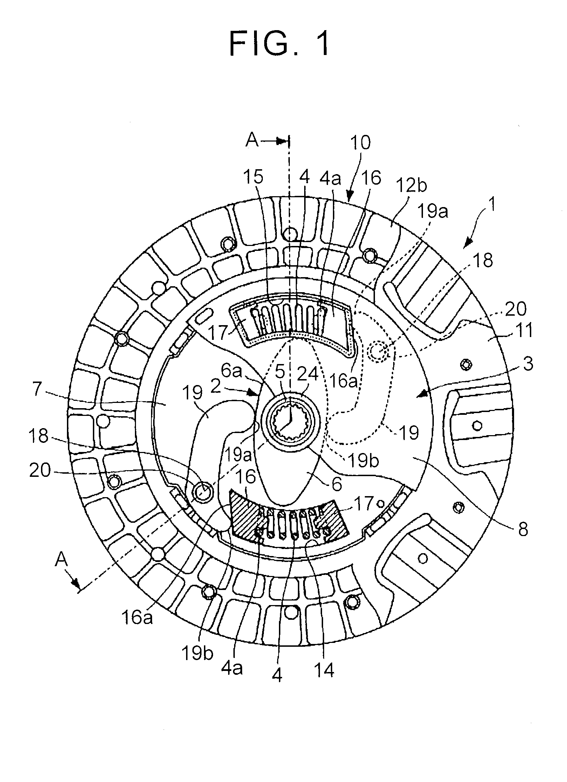

FIG. 1 through FIG. 9 are a diagram illustrating the first embodiment of the torsional vibration damping device of the present invention.

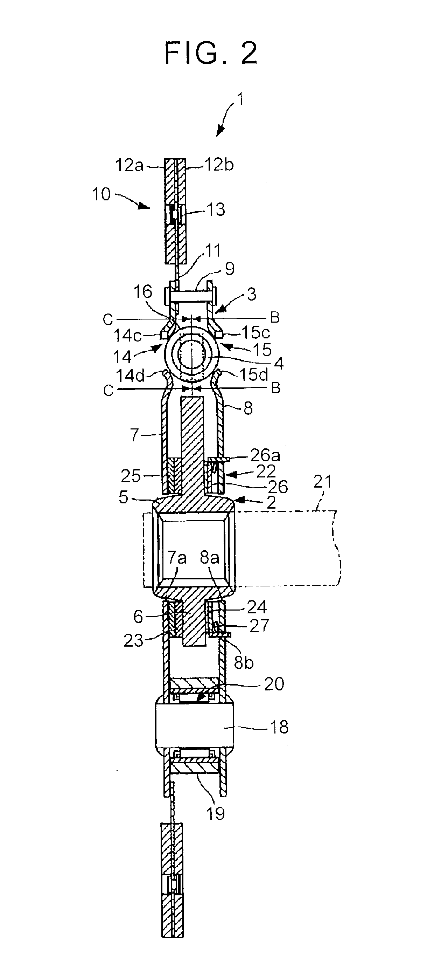

First, the structure thereof will be described. In FIG. 1 and FIG. 2, the torsional vibration damping device 1 includes a first rotary member 2, a second rotary member 3 provided on the first same axis, and a pair of coil springs 4 which are elastic members provided between the first rotary member 2 and the second rotary member 3 and which are compressed in the circumferential direction of the first rotary member 2 when the first rotary member 2 and the second rotary member 3 rotate relative to each other.

The second rotary member 3 is configured so that a rotational torque from an internal combustion engine (not show) which is a driving source is input thereto, and the first rotary member 2 is configured to transmit the rotational torque input to the second rotary member 3 to the transmission of a driving power transmission system (not shown).

The first rotary member 2 is constituted of a boss member 5 which is to be spline-fit to the outer periphery of an input shaft 21 of the transmission of the driving power transmission system and a cam member 6 which is provided on the outer periphery of the boss member 5.

In the meantime, the boss member 5 and the cam member 6 may be formed integrally. Alternatively, the boss member 5 and the cam member 6 may be formed separately and the spline portion may be formed on the outer periphery of the boss member 5 and the inner periphery of the cam member 6 so that the boss member 5 and the cam member 6 may be spline-fit.

The second rotary member 3 includes a pair of the disk plates 7, 8 and a clutch disk 10. The disk plates 7, 8 are arranged on both sides in the axial direction of the boss member 5 and connected with a pin 9 and the rotary shaft 18 such that they are apart from each other by a predetermined gap in the axial direction.

The boss member 5 is accommodated in circular central holes 7a, 8a of the disk plates 7, 8 and the boss member 5 is provided on the same axis as the disk plates 7, 8.

The pin 9 and the rotary shaft 18 are stretched between the disk plates 7 and 8, and because both end portions in the axial direction thereof are formed in a large diameter, they are engaged into the disk plates 7, 8 so that they never get loose. Thus, the disk plates 7, 8 are integrated by the rotary shaft 18 and the pin 9 so that they rotate together.

Further, the clutch disk 10 is provided on an outward side in the radius direction of the disk plate 7 and includes a cushioning plate 11 and friction materials 12a, 12b. The cushioning plate 11 is formed of a ring-shaped member which is undulated in the thickness direction and fixed to the disk plates 7, 8 with the pin 9.

The friction materials 12a, 12b are fixed to both surfaces of the cushioning plate 11 with a rivet 13. The friction materials 12a, 12b are positioned between a flywheel (not shown) fixed to a crankshaft of the internal combustion engine and a pressure plate of a clutch cover bolted to the flywheel.

Then, the friction materials 12a, 12b are pressed by the pressure plate so that they are fit to the flywheel and the pressure plate due to friction. As a result, the rotational torque of the internal combustion engine is input to the disk plates 7, 8.

When a clutch pedal (not shown) is depressed, pressing of the pressure plate against the friction materials 12a, 12b is released so that the friction materials 12a, 12b are separated from the flywheel. As a result, no rotational torque of the internal combustion engine is input to the disk plates 7, 8.

A pair of accommodating holes 14, 15 is formed in the disk plates 7, 8 such that they are apart from each other in the circumferential direction. The accommodating holes 14, 15 accommodate coil springs 4 such that they are opposed to each other with respect to the axial direction of the disk plates 7, 8. In the meantime, the circumferential direction of the disk plates 7, 8 and the cam member 6 is a rotation direction of the disk plates 7, 8 and the cam member 6, and naturally, they are in the same direction.

The accommodating holes 14, 15 are curved along the circumference of the disk plates 7, 8 and the coil springs 4 are curved in the same direction of the circumference of the disk plates 7, 8 in the natural state, i.e., in a state before they are installed in the accommodating holes 14, 15. Thus, in a state in which the coil springs 4 are accommodated in the accommodating holes 14, 15, the coil springs 4 are curved. The accommodating holes 14, 15 are punched out on the outside peripheral side of the coil spring 4 and both ends in the circumferential direction of the disk plates 7, 8 are closed ends.

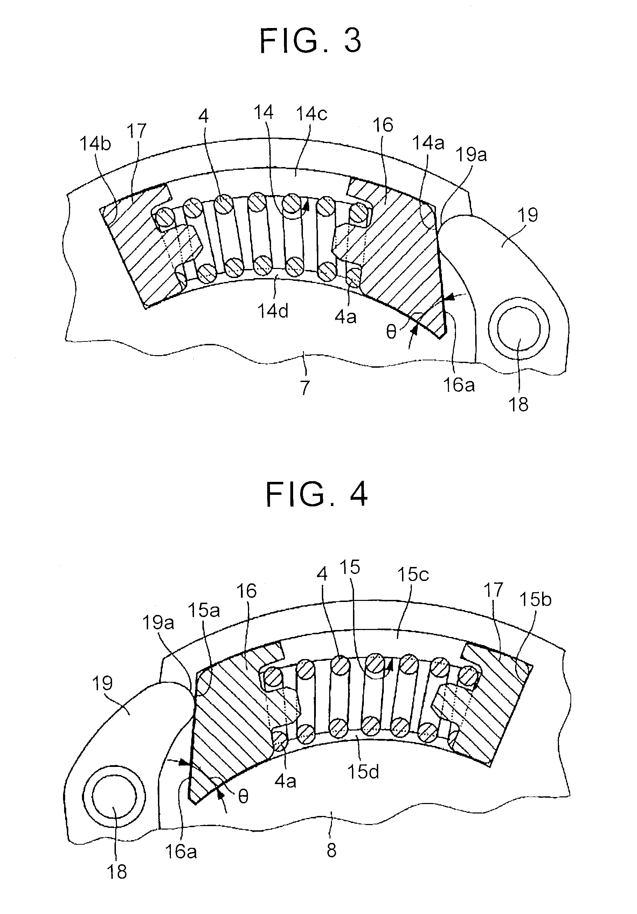

As illustrated in FIG. 3 and FIG. 4, the disk plates 7, 8 include outside supporting pieces 14c, 15c extending in the circumferential direction along the outside edge in the radius direction of each of the accommodating holes 14, 15 and inside supporting pieces 14d, 15d extending in the circumferential direction along the inside edge in the radius direction of each of the accommodating holes 14, 15. The outside supporting pieces 14c, 15c and the inside supporting pieces 14d, 15d project outward in the axial direction of the disk plates 7, 8.

The both end portions in the circumferential direction of the coil spring 4 are held by a spring seat 16 and a spring seat 17, and an end turn is formed on the inside peripheral face of each of the spring seats 16, 17.

This end turn corresponds to a single winding turn or two winding turns of on the both end portions in the circumferential direction of the coil spring 4 and the both end portions in the circumferential direction of the coil spring 4 are seated on the end turns. As a result, a terminal and a leader in the winding direction of the coil spring 4 are engaged with the end turn, so that the coil spring 4 can be mounted on the spring seats 16, 17 while the coil spring 4 is prevented from turning.

As shown in FIG. 3 and FIG. 4, the closed ends on both ends in the circumferential direction of the disk plates 7, 8 construct contact portions 14a, 14b, 15a, 15b which the both end portions in the circumferential direction of the spring seats 16, 17 contact. In a state in which the spring seats 16, 17 are stretched, the end portions in the circumferential direction of the spring seats 16, 17 contact the contact portions 14a, 14b, 15a, 15b.

Further, the outer peripheries of the spring seats 16, 17 are opposed to the outside supporting pieces 14c, 15c and the inside supporting pieces 14d, 15d. As a result, the spring seats 16, 17 are prevented from slipping out of the accommodating holes 14, 15 by the outside supporting pieces 14c, 15c and the inside supporting pieces 14d, 15d.

An arm member 19 which serves as a torque transmitting member is provided between the spring seat 16 and the cam member 6. This arm member 19 is positioned between the disk plates 7 and 8 such that it is supported swingably by the rotary shaft 18.

In FIG. 1, a needle bearing 20 is provided between the rotary shaft 18 and the arm member 19 and, the arm member 19 is connected rotatably to the rotary shaft 18 via the needle bearing 20.

An end 19a of the arm member 19 contacts a cam surface 6a of the cam member 6 and the other end 19b of the arm member 19 contacts the spring seat 16.

In the present embodiment, the cam member 6 has the cam surface 6a which is configured so that the curvature changes along the circumference thereof. When the torsion angle between the disk plates 7, 8 and the cam member 6 is minimum (torsion angle is substantially 0°), that is, when the disk plates 7, 8 and the cam member 6 are located at an initial position where there is no torsion therebetween, the curvature of the cam surface 6a increases as the torsion angle between the disk plates 7, 8 and the cam member 6 increases from the initial position of the cam member 6.

Thus, when the cam member 6 rotates, the position of the cam surface 6a which the end of the arm member 19 contacts is changed. As a result, the spring seat 16 is urged by the arm member 19 to change the compression amount of the coil spring 4. When the coil spring 4 is elastically deformed so that it is compressed or expanded, the spring seat 16 moves relative to the spring seat 17 so that the spring seat 16 approaches or leaves the spring seat 17.

The length from the center of the rotary shaft 18 to the end 19a of the arm member 19 and the length from the center of the rotary shaft 18 to the other end 19b of the arm member 19 are set to a ratio of 3:1. The length from the center of the rotary shaft 18 to the other end 19b of the arm member 19 is configured to be smaller than the length from the center of the rotary shaft 18 to the end 19a of the arm member 19. Thus, when the arm member 19 rotates around the rotary shaft 18, the end 19a of the arm member 19 is displaced largely toward the axis rather than in the circumferential direction.

Further, the arm members 19 are arranged symmetrically with respect to the central axis of the disk plates 7, 8 and the arm members 19 are so configured that the ends of the arm members 19 can contact the cam surfaces 6a having the same curvature arranged across the central axis of the disk plates 7, 8.

The inside end in the radius direction and the outside end in the radius direction of the spring seats 16, 17 are shaped along the curved faces of the inside end in the radius direction and the outside end in the radius direction of the accommodating holes 14, 15. The spring seat 16 is shaped to be movable along the accommodating holes 14, 15 with elastic deformation of the coil spring 4.

The spring seat 16 of the present embodiment constructs a holding member and when this spring seat 16 is mounted between the other end 19b of the arm member 19 and the coil spring, holds an end portion 4a on the arm member 19 side of the coil spring 4 (see FIGs. 3, 4).

As illustrated in FIG. 1, FIG. 3, FIG. 4, a contact surface which the other end 19b of the arm member 19 contacts is formed on the spring seat 16 and constructed of a linear tapered face 16a which is inclined with respect to the circumferential direction of the disk plates 7, 8. That is, the spring seat 16 of the present embodiment is formed in a wedge shape having the tapered face 16a.

On the other hand, as illustrated in FIG. 2, a hysteresis torque generating mechanism 22 is provided between the disk plates 7, 8 and the cam member 6 and the hysteresis torque generating mechanism 22 is constituted of annular friction materials 23, 24, 25, 26 and a disc spring 27.

The friction materials 23, 24 are constituted of a member whose surface has a predetermined friction coefficient and fixed to the outer peripheral face along the axial direction of the cam member 6 with adhesive. In the meantime, it is permissible to provide the friction materials 23, 24 with pins or the like integrally and fit the pins into pin holes formed in the outer peripheral face along the axial direction of the cam member 6 to mount the friction materials 23, 24 on the cam member 6.

The friction material 25 is formed of a member whose surface has a predetermined friction coefficient and fixed to the inner peripheral face of the disk plate 7 with adhesive. In the meantime, it is permissible to provide the friction material 25 with pins or the like integrally and fit the pins into pin holes formed in the inner peripheral face of the disk plate 7 to mount the friction material 25 on the disk plate 7.

The friction material 26 is constituted of a member whose surface has a predetermined friction coefficient and a plurality of pins 26a are provided integrally with the outer peripheral face in the radial direction. The pin 26a is to be fit into a pin hole 8b formed in the inner peripheral face of the disk plate 8 and the friction material 26 is installed on the inner peripheral face of the disk plate 8.

The disc spring 27 is formed in a conical shape and interposed between the friction material 26 and the disk plate 8.

The disc spring 27 generates elastic force in the axial direction of the cam member 6 so as to bring the friction material 24 and the friction material 26 into a friction contact with each other and further the friction material 23 and the friction material 25 into a friction contact with each other. As a result, the cam member 6 and the disk plates 7, 8 are brought into a friction contact so as to generate hysteresis torque between the cam member 6 and the disk plates 7, 8.

Next, an operation will be described.

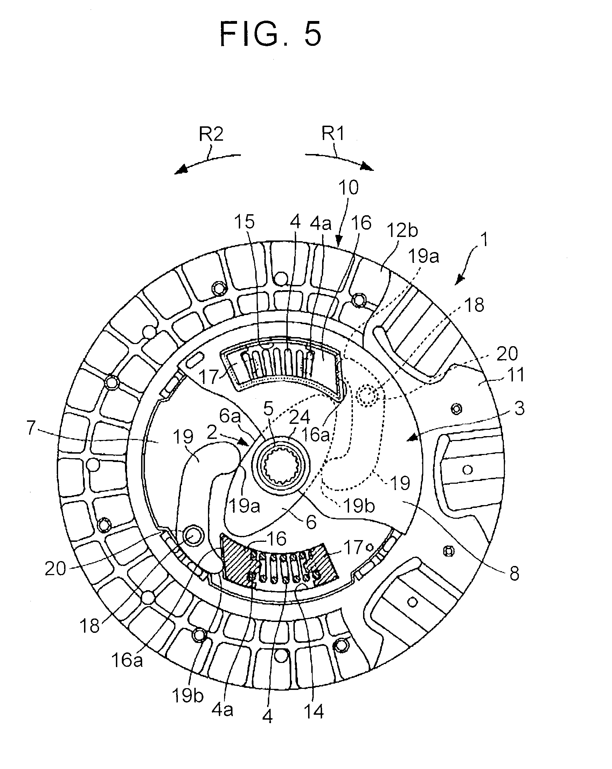

FIG. 5 through FIG. 8 illustrate a state in which the disk plates 7, 8 are rotating in a counterclockwise direction (direction of R2) from a state of FIG. 1 by receiving a rotational torque of the internal combustion engine, and for convenience for description, it is assumed that the cam member 6 is twisted in the clockwise direction (direction of R1) which is a positive side with respect to the disk plates 7, 8.

Here, it is at the time of acceleration of the vehicle that the cam member 6 is twisted to the positive side with respect to the disk plates 7, 8.

When the friction materials 12a, 12b are pressed by the pressure plate, they engage the flywheel and the pressure plate by friction so as to input the rotational torque of the internal combustion engine into the disk plates 7, 8.

In the torsional vibration damping device 1 of the present embodiment, when a relative rotation between the disk plates 7, 8 and the cam member 6 is small, that is, the torsion angle between the disk plates 7, 8 and the cam member 6 is as small as 0°, as shown in FIG. 1, the cam member 6 is positioned at the initial position so that it rotates integrally with the boss member 5.

If the rotational fluctuation due to the torque fluctuation of the internal combustion engine is small at the time of acceleration of the vehicle, the fluctuation torque between the disk plates 7, 8 and the boss member 5 is small, so that the boss member 5 rotates in the clockwise direction (direction of R1) relative to the disk plates 7, 8.

At this time, as the torsion angle between the disk plates 7, 8 and the boss member 5 increases like states shown in FIG. 1 through FIG. 5, the cam member 6 rotates in the direction of R1 so that the end 19a of the arm member 19 slides along the cam surface 6a.

Because the curvature of the cam surface 6a increases as the torsion angle between the disk plates 7, 8 and the boss member 5 increases, the end 19a of the arm member 19 is pressed by the cam surface 6a of the cam member 6 whose curvature increases gradually, so that the arm member 19 rotates around the rotary shaft 18.

When the arm member 19 rotates around the rotary shaft 18, the other end 19b of the arm member 19 moves inward in the radius direction along the tapered face 16a of the spring seat 16.

Thus, displacement in the radius direction of the other end 19b of the arm member 19 is converted to displacement in the circumferential direction via the spring seat 16. At this time, the spring seat 16 moves to the spring seat 17 side along the peripheries of the accommodating holes 14, 15 so as to compress the coil spring 4 in the circumferential direction.

When the arm member 19 urges the coil spring 4 via the spring seat 16, the arm member 19 presses the cam member 6 with a strong pressing force with a pin 42 as a fulcrum point due to a reaction of the compressed coil spring 4 according to principle of leverage.

Thus, the rotational torque of the disk plates 7, 8 is transmitted to the cam member 6 via the coil spring 4 and the arm member 19. In the meantime, FIG. 5 illustrates a state in which the torsion angle between the disk plates 7, 8 and the boss member 5 is +30°.

Therefore, while the driving power of the internal combustion engine is transmitted from the disk plates 7, 8 to the boss member 5, torsional vibration between the disk plates 7, 8 and the boss member 5 is absorbed and damped.

If the rotational fluctuation due to the torque fluctuation of the internal combustion engine increases further, the fluctuation torque transmitted from the disk plates 7, 8 to the cam member 6 increases and the cam member 6 rotates further relative to the disk plates 7, 8 in the clockwise direction (direction of R1).

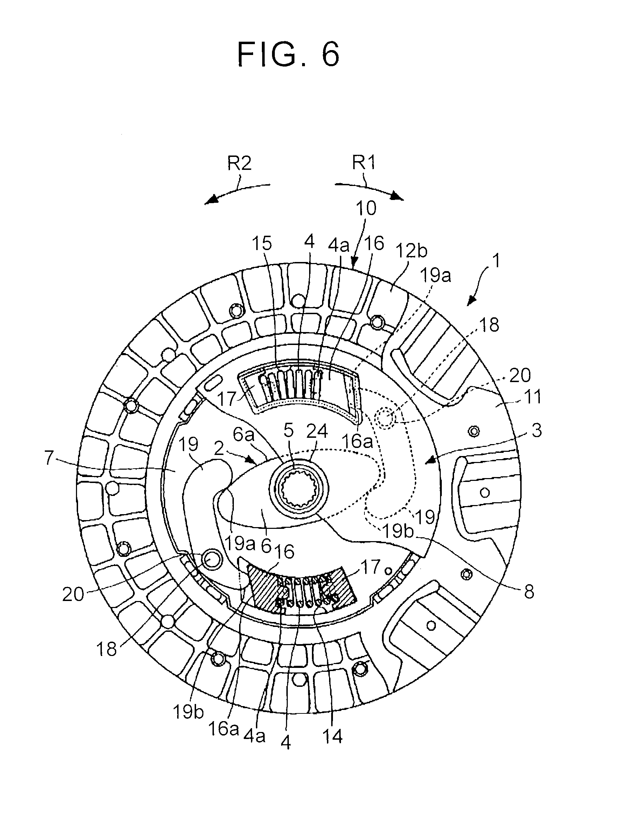

If the torsion angle between the disk plates 7, 8 and the cam member 6 increases further from the state shown in FIG. 5, as shown in FIG. 6, the end 19a of the arm member 19 slides along the cam surface 6a. When the end 19a of the arm member 19 is pressed by the cam surface 6a of the cam member 6, the other end 19b of the arm member 19 is moved further inward in the radius direction of the disk plates 7, 8.

Thus, displacement in the radius direction of the other end 19b of the arm member 19 is converted to displacement in the circumferential direction via the spring seat 16. At this time, the spring seat 16 is moved further toward the spring seat 17 side along the peripheries of the accommodating holes 14, 15, so that the coil spring 4 is compressed further in the circumferential direction.

Therefore, while the driving power of the internal combustion engine is transmitted from the disk plates 7, 8 to the boss member 5, torsional vibration between the disk plates 7, 8 and the boss member 5 can be absorbed and damped. In the meantime, FIG. 6 illustrates a state in which the torsion angle between the disk plates 7, 8 and the boss member 5 is +70°.

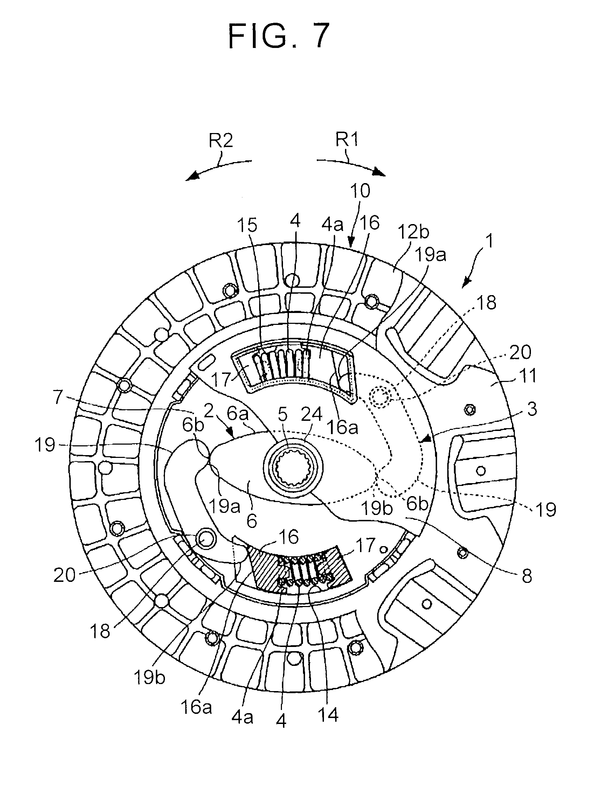

Further, when an excessive torque is input to the disk plates 7, 8 from the internal combustion engine, as shown in FIG. 7, the end of the arm member goes beyond an apex 6b which has a maximum curvature of the cam surface 6a so as to idle the disk plates 7, 8 with respect to the cam member 6. As a result, when accelerating a vehicle, the cam member 6 can be made to function as a torque limiter. In the present embodiment, when the end of the arm member 19 rides on the apex 6b of the cam surface 6a, the torsion angle between the disk plates 7, 8 and the cam member 6 increases up to +90°.

On the other hand, at the time of deceleration, the driving torque of the internal combustion engine decreases to generate engine brake. Thus, rotational torque is input from an input shaft 21 of the transmission into the cam member 6. If the rotational fluctuation due to the torque fluctuation of the internal combustion engine at the time of deceleration is small, the fluctuation torque between the disk plates 7, 8 and the cam member 6 is small. Thus, the cam member 6 is twisted to the negative side (direction of R2) relative to the disk plates 7, 8.

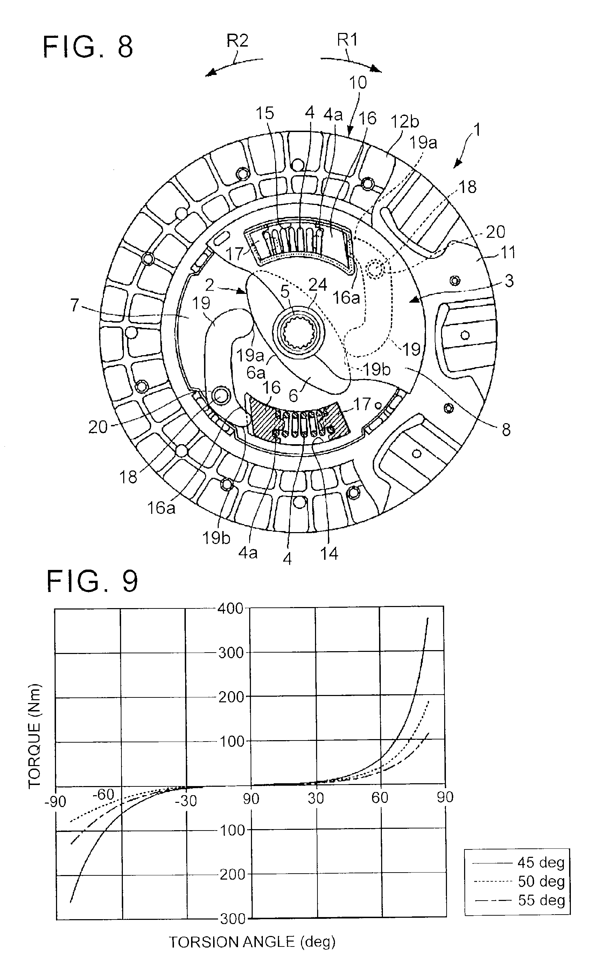

When the disk plates 7, 8 and the cam member 6 rotate relative to each other from the state illustrated in FIG. 1 to the state illustrated in FIG. 8, as the torsion angle between the disk plates 7, 8 and the cam member 6 increases, the end 19a of the arm member 19 slides on the cam surface 6a when the cam member 6 rotates.

Because the curvature of the cam surface 6a increases as the torsion angle between the disk plates 7, 8 and the cam member 6 increases from the state in which the cam member 6 is located at the initial position, when the end 19a of the arm member 19 is pressed by the cam surface 6a of the cam member 6 whose curvature increases gradually, the other end 19b of the arm member 19 is moved inward in the radius direction of the disk plates 7, 8.

In this case also like on the acceleration side, displacement of the other end 19b of the arm member 19 in the radius direction is converted to displacement in the circumferential direction via the spring seat 16. At this time, the spring seat 16 is moved to the spring seat 17 side along the peripheries of the accommodating holes 14, 15 so as to compress the coil spring 4 in the circumferential direction.

Therefore, while the driving power of the driving power transmission system is transmitted from the cam member 6 to the disk plates 7, 8, torsional vibration between the disk plates 7, 8 and the cam member 6 can be absorbed and damped.

On the other hand, because the hysteresis torque generating mechanism 22 is interposed between the disk plates 7, 8 and the cam member 6, even if the cam member 6 is twisted to any way of the acceleration side and the deceleration side relative to the disk plates 7, 8, a predetermined hysteresis torque can be generated between the disk plates 7, 8 and the cam member 6.

As described above, the torsional vibration damping device 1 of the present embodiment includes disk plates 7, 8, a cam member 6 having an elliptical cam surface 6a which is provided on the same axis as the disk plates 7, 8 and rotates integrally with the boss member 5, and arm members 19 which are provided between the cam member 6 and the coil spring 4 and swing around the rotary shaft 18 stretched between the disk plates 7 and 8, with the end 19a thereof making contact with the cam surface 6a and the other end 19b thereof making contact with the tapered face 16a of the spring seat 16.

Thus, by increasing the range of the torsion angle between the disk plates 7, 8 and the boss member 5 to a wider angle, the stiffness of the coil spring 4 can be reduced. Thus, the torsional stiffness of the torsional vibration damping device 1 can be entirely reduced and the rotational torque can be transmitted from the disk plates 7, 8 to the boss member 5 smoothly.

Further, in the torsional vibration damping device 1 of the present embodiment, the spring seat 16 for holding the end portion 4a of the coil spring 4 side is provided between the other end 19b of the arm member 19 and the coil spring 4, and the spring seat 16 which contacts the other end 19b of the arm member 19 is constructed of the tapered face 16a.

Here, if no tapered face is formed on the spring seat 16 and the face of the spring seat 16 which the end 19a of the arm member 19 contacts is straight in a direction perpendicular to the circumferential direction, when the other end 19b of the arm member 19 is displaced in the radius direction, the spring seat 16 cannot be moved largely in the circumferential direction. Thus, the coil spring 4 cannot be compressed largely in the circumferential direction, so that no large reaction force in the circumferential direction can be received from the coil spring 4.

In comparison, in the torsional vibration damping device 1 of the present embodiment, because the spring seat 16 which the other end 19b of the arm member 19 contacts is constructed of the tapered face 16a, when the other end 19b of the arm member 19 is displaced in the radius direction, the other end 19b can be moved on the tapered face 16a of the spring seat 16 so that the displacement in the radius direction of the other end 19b of the arm member 19 can be converted to a displacement in the circumferential direction via the spring seat 16.

Thus, by urging the coil spring 4 largely in the circumferential direction by means of the arm member 19, the reaction force applied to the arm member 19 from the coil spring 4 can be increased.

Thus, by increasing the stiffness of the coil spring 4 without increasing the size of the coil spring 4 in the radius direction, the torsional stiffness of the torsional vibration damping device 1 can be increased. As a result, the size of the torsional vibration damping device 1 can be prevented from being increased.

FIG. 9 is a diagram illustrating the torsional characteristic between the disk plates 7, 8 and the cam member 6 or a graph for explaining the relationship between the torsion angle of the disk plates 7, 8 and the cam member 6 and an output torque output from the cam member 6 according to the present embodiment.

The abscissa axis indicates a relative torsion angle of the cam member 6 relative to the disk plates 7, 8 and the ordinate axis indicates an output torque output from the cam member 6, i.e., the torsional stiffness. The output torque of the ordinate axis corresponds to reaction force (spring stiffness) of the cam member 6 relative to the disk plates 7, 8.

As the torsion angle between the disk plates 7, 8 and the cam member 6 increases as shown in FIG. 9, the coil spring 4 is compressed so that the pressing force by the arm member 19 to the cam member 6 increases.

Then, the pressing force by the arm member 19 to the cam member 6 increases so as to increase the torque. The change in torque at this time leads to curved torsional characteristic which changes continuously.

According to the present embodiment, because the end of the arm member 19 contacts the cam surface 6a of the cam member 6 as shown in FIG. 9, the torsion angle between the disk plates 7, 8 and the boss member 5 can be increased to a wide angle up to 180° including the positive side and the negative side totally accompanied by a rotation of the cam member 6.

As evident from FIG. 9, when the torsion angle between the disk plates 7, 8 and the boss member 5 is small, the torsional stiffness between the disk plates 7, 8 and the boss member 5 can be turned to a torsional characteristic having a low torsional stiffness.

Thus, in a region in which the rotational torque transmitted from the disk plates 7, 8 to the boss member 5 is small like when the engine speed is changed to neutral from an idle state, the torsional vibration originating from the rotational fluctuation due to the torque fluctuation of the internal combustion engine is damped so as to suppress rattling sound from a gear pair of transmission without any load.

Further, the torsional stiffness can be entirely decreased by turning the torsion angle between the disk plates 7, 8 and the boss member 5 to a wide angle. Thus, at the time of acceleration/deceleration when the rotational torque transmitted from the disk plates 7, 8 to the boss member 5 is large, the torsional vibration originating from the rotational fluctuation due to the torque fluctuation of the internal combustion engine can be damped so as to suppress the clanking noise which is generated by a collision of a pair of idling gears of transmission gear pairs.

Further, because the reduction in stiffness of the coil spring 4 can be achieved, when the torsion angle between the disk plates 7, 8 and the boss member 5 is large, the torsional vibration due to the torsional fluctuation of the driving power transmission system can be damped so as to suppress generation of booming noise in a vehicle compartment.

Further, as illustrated in FIG. 9, if an angle of inclination θ (see FIG. 2, FIG. 3) of the tapered face 16a, that is, the angle of inclination of the tapered face 16a with respect to a tangent of a circle having the same radius around a rotation center of the cam member 6 is reduced, the torsional stiffness can be increased.

In other words, if the contact surface of the coil spring which the end 19a of the arm member 19 contacts is formed to be at the right angle (90°) with respect to the tangent of a circle like conventionally, the torsional stiffness is decreased.

Thus, in the torsional vibration damping device 1 of the present embodiment, if the angle of inclination of the tapered face 16a of the spring seat 16 is set to a small angle, for example, 45°, the reaction force applied to the arm member 19 from the coil spring 4 can be increased, because the displacement in the radius direction of the other end 19b of the arm member 19 can be converted more to the displacement in the circumferential direction via the spring seat 16. As a result, the torsional stiffness of the torsional vibration damping device 1 can be increased.

In addition, in the present embodiment, because the hysteresis torque generating mechanism 22 is interposed between the disk plates 7, 8 and the cam member 6, when the disk plates 7, 8 and the cam member 6 rotate relative to each other, a predetermined hysteresis torque can be generated.

Thus, at the time of acceleration/deceleration when the rotational torque transmitted from the disk plates 7, 8 to the boss member 5 is large, the hysteresis torque can be generated to a large torsional vibration originating from the rotational fluctuation due to the torque fluctuation of the internal combustion engine.

Thus, the generation of booming noise in a vehicle compartment can be suppressed further by damping the torsional vibration due to the torsional resonance of the driving power transmission system and at the same time, generation of clanking noise can be suppressed further.

Further, the coil spring 4 of the present embodiment is configured to be curved along the accommodating holes 14, 15 in the natural condition. Thus, when the displacement in the radius direction of the other end 19b of the arm member 19 is converted to the displacement in the circumferential direction via the spring seat 16, the coil spring 4 can be urged largely in the circumferential direction by the arm member 19.

Thus, reaction applied from the coil spring 4 to the arm member 19 can be increased efficiently.

### (Second embodiment)

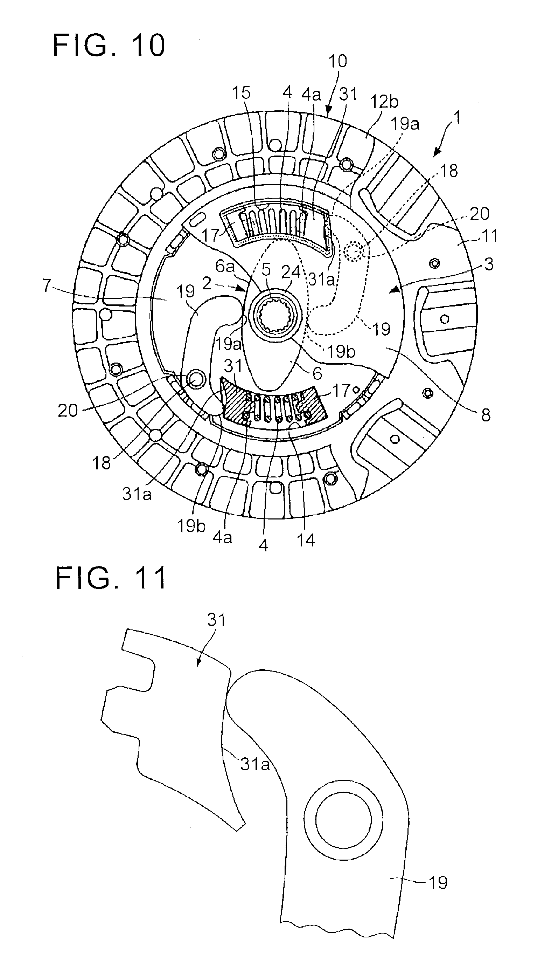

FIG. 10 through FIG. 13 are diagrams illustrating the second embodiment of the torsional vibration damping device of the present invention, and like reference numerals are attached to the same configuration as the first embodiment and description thereof is omitted.

As shown in FIG. 10 and FIG. 11, the present embodiment is configured to include a spring seat 31 as a holding member for holding the end portion 4a of the coil spring 4 and so that a tapered face 31 a of a spring seat 31 has a predetermined curvature.

The predetermined curvature is set to increase as it goes from outward in the radius direction of the disk plates 7, 8 to inward in the radius direction thereof and the other end 19b of the arm member 19 moves along the tapered face 31a whose curvature varies.

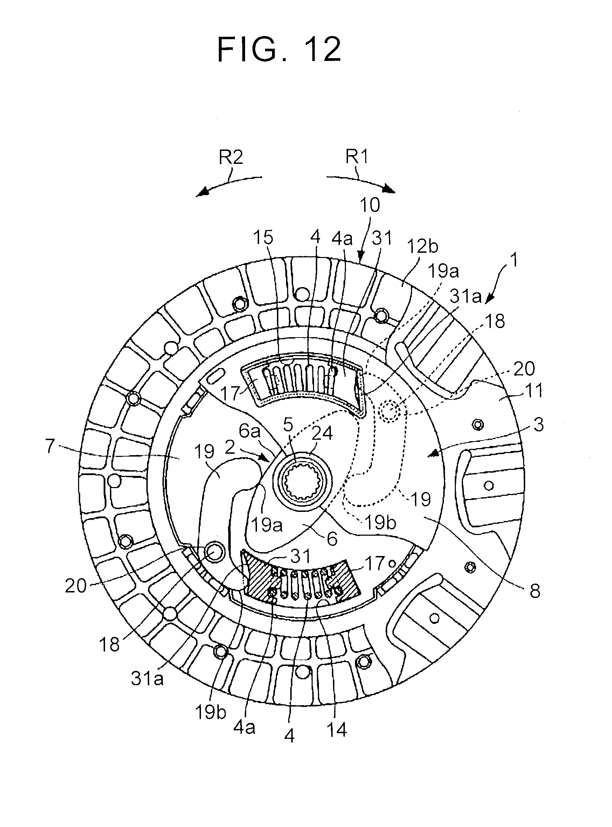

In a region in which the torsion angle between the disk plates 7, 8 and the cam member 6 is small as illustrated in FIG. 12, the curvature of the tapered face 31a which the other end 19b of the arm member 19 contacts is small.

Because at this time, the other end 19b of the arm member 19 is displaced in the radius direction while it contacts the tapered face 31 a having a small curvature, the displacement in the radius direction of the other end 19b of the arm member 19 is converted by a small amount to the displacement in the circumferential direction of the coil spring 4. Thus, in a low torque region in which the torsional stiffness between the disk plates 7, 8 and the cam member 6 is small, the torsional stiffness can be reduced.

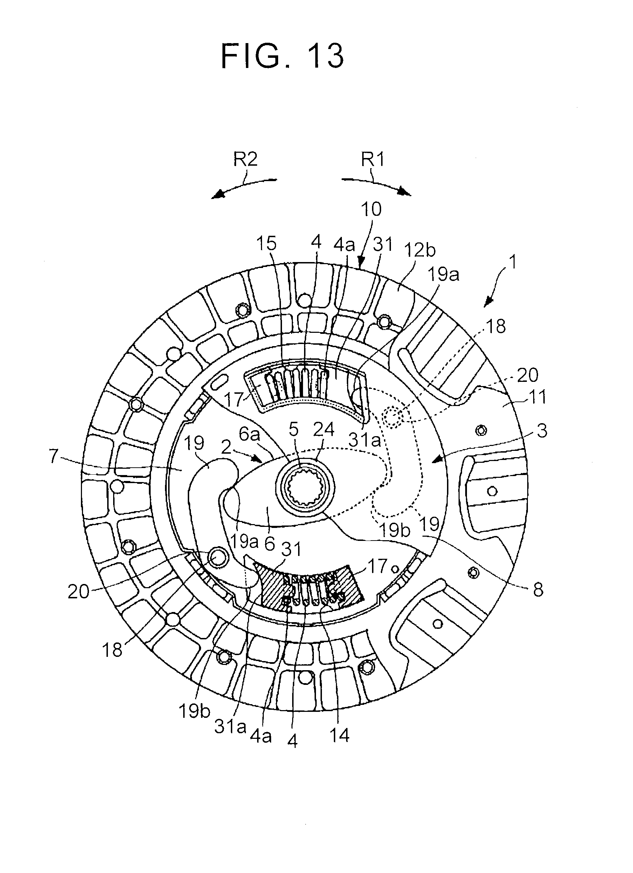

On the other hand, as illustrated in FIG. 13, in a region in which the torsion angle between the disk plates 7, 8 and the cam member 6 is large, the curvature of the tapered face 31a which the other end 19b of the arm member 19 contacts is large.

Because the other end 19b of the arm member 19 contacts the tapered face 31a having a large curvature so that it is displaced in the radius direction, the displacement in the radius direction of the other end 19b of the arm member 19 is converted largely to the displacement in the circumferential direction of the coil spring 4.

Thus, the torsional stiffness can be increased in the high torque region in which the torsional stiffness between the disk plates 7, 8 and the cam member 6 is high. As a result, an optimum torsional stiffness can be set in a low torque region and a high torque region by devising the curvature of the tapered face 31a irrespective of the configuration of the cam member 6.

### (Third embodiment)

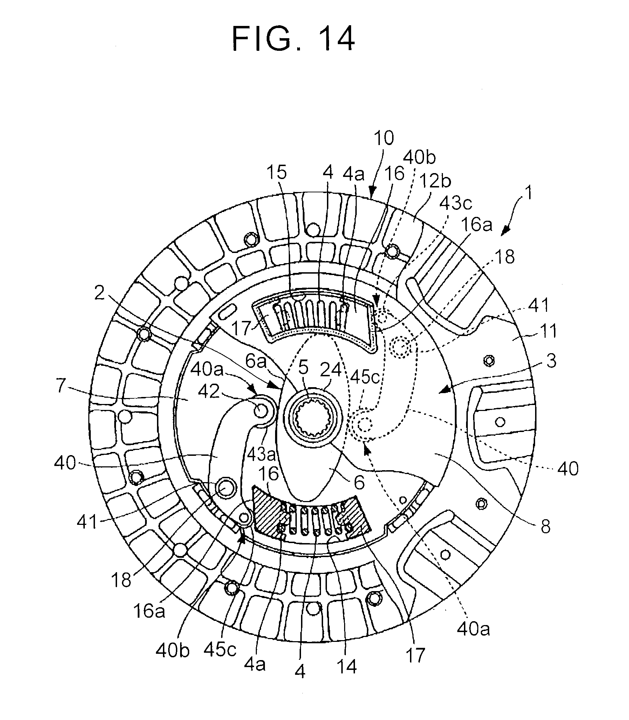

FIG. 14 through FIG. 16 are diagrams illustrating the third embodiment of the torsional vibration damping device of the present invention, and like reference numerals are attached to the same configuration as the first embodiment and description thereof is omitted.

As illustrated in FIG. 14 through FIG. 16, an arm member 40 which serves as a torque transmitting member is interposed between the cam member 6 and the spring seat 16 and the arm member 40 is installed rotatably to the rotary shaft 18 via a needle bearing 41.

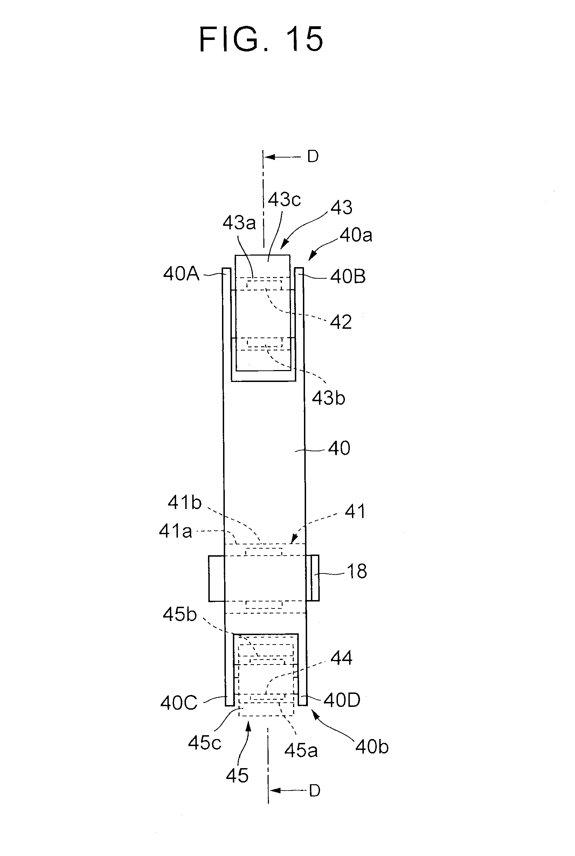

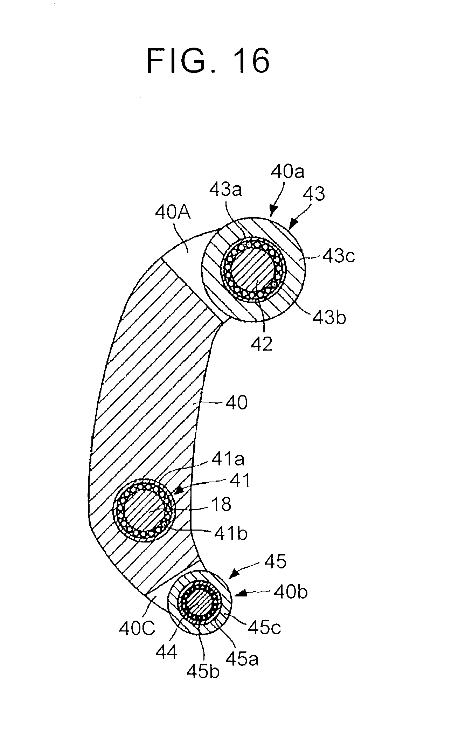

As shown in FIG. 15 and FIG. 16, the needle bearing 41 is constituted of an outer race 41a mounted on the arm member 40 and acicular needles 41b interposed between the outer race 41 a and the rotary shaft 18

Because the needle bearing 41 is configured so that the outer race 41 a is rotatable relative to the rotary shaft 18 via the acicular needles 41b, the arm member 40 is mounted rotatably to the rotary shaft 18 via the needle bearing 41.

An end 40a of the arm member 40 is formed to projecting pieces 40A, 40B which serve as two-way sheet portions, and the projecting pieces 40A, 40B are connected with a pin 42.

A roller member 43 is mounted rotatably to this pin 42 as a first roller element. The roller member 43 is constituted of an outer race 43a provided on the outer periphery of the pin 42, acicular needles 43b interposed between the outer race 43a and the pin 42, and a roller 43c mounted on the outer race 43a at the outer periphery of the outer race 43a. The roller 43c is rotatable relative to the pin 42 via the acicular needles 43b.

The roller 43c is configured to rotate in contact with the cam surface 6a of the cam member 6 and the end 40a of the arm member 40 contacts the cam surface 6a of the cam member 6 via the roller 43c.

Further, the other end 40b of the arm member 40 is formed to two-way projecting pieces 40C, 40D and the projecting pieces 40C, 40D are connected with a pin 44.

A roller member 45 is mounted rotatably to the pin 44 as a second roller element. The roller member 45 is constituted of an outer race 45a provided on the outer periphery of the pin 44, acicular needles 45b interposed between the outer race 45a and the pin 44, and a roller 45c mounted on the outer race 45a at the outer periphery of the outer race 45a. The roller 45c is rotatable relative to the pin 44 via the acicular needles 45b.

The roller 45c is configured to contact the tapered face 16a of the spring seat 16 and the other end 40b of the arm member 40 contacts the tapered face 16a of the spring seat 16 via the roller 45c.

In the torsional vibration damping device 1 of the present embodiment, because the roller member 43 which contacts the cam surface 6a of the cam member 6 is provided rotatably on the end 40a of the arm member 40, the end 19a of the arm member 19 can be made to slide along the cam surface 6a of the cam member 6 via the roller member 43.

Thus, contact resistance between the end 19a of the arm member 19 and the cam surface 6a of the cam member 6 can be reduced to prevent the end 19a of the arm member 19 and the cam surface 6a of the cam member 6 from being worn.

In the torsional vibration damping device 1, because the roller member 45 which contacts the tapered face 16a of the spring seat 16 is provided rotatably on the other end 19b of the arm member 19, the other end 19b of the arm member 19 can be made to slide along the tapered face 16a of the spring seat 16 via the roller member 45.

Thus, the contact resistance between the other end 19b of the arm member 19 and the tapered face 16a of the spring seat 16 can be reduced so as to prevent the other end 19b of the arm member 19 and the tapered face 16a of the spring seat 16 from being worn.

In the meantime, although in the above-described respective embodiments, the torsional vibration damping device 1 is interposed between the internal combustion engine of a vehicle and the driving power transmission system having a transmission, the present invention is not restricted to this example, but any torsional vibration damping device may be applied as long as it can be provided on the driving power transmission system of the vehicle or the like.

In case of a hybrid vehicle, for example, the present invention may be applied to its torsional vibration damping device such as a hybrid damper or the like which is interposed between the output shaft of the internal combustion engine and the driving power dividing mechanism for dividing the driving power to the electric motor and the wheel side output shaft.

Further, the present invention may be applied to a torsional vibration damping device such as a lock-up damper or the like which is interposed between a lock-up clutch device and transmission gear pairs of the torque converter. Further, the torsional vibration damping device may be provided between a differential case and a ring gear provided on the outer periphery of the differential case.

Although in the present embodiment, the clutch disk 10 and the disk plates 7, 8 are constructed as the second rotary member, and the boss member 5 and the cam member 6 are constructed as the first rotary member, the clutch disk 10 and the disk plates 7, 8 may be constructed as the first rotary member while the boss member 5 and the cam member 6 may be constructed as the second rotary member.

As described above, the torsional vibration damping device of the present invention has an effect that the torsional stiffness can be increased without enlarging the elastic member in the radius direction and is useful as a torsional vibration damping device or the like in which the first rotary member and the second rotary member are interconnected via the torque transmission member and the elastic member so that they are rotatable relative to each other so as to enable the rotational torque to be transmitted between the first rotary member and the second rotary member.

### DESCRIPTION OF REFERENCE NUMERALS

1/ TORSIONAL VIBRATION DAMPING DEVICE
2/ FIRST ROTARY MEMBER
3/ SECOND ROTARY MEMBER
4/ COIL SPRING (ELASTIC MEMBER)
4A/ END PORTION (END PORTION OF COIL SPRING)
5/ BOSS MEMBER (FIRST ROTARY MEMBER)
6/ CAM MEMBER (FIRST ROTARY MEMBER)
6A/ CAM SURFACE
7, 8/ DISK PLATE (SECOND ROTARY MEMBER)
14, 15/ ACCOMMODATING HOLE
16, 31/ SPRING SEAT (HOLDING MEMBER)
16A, 31A/ TAPERED FACE
19, 40/ARM MEMBER (TORQUE TRANSMISSION MEMBER)
19A, 40B/ END
19B, 40B/ OTHER END
21/ INPUT SHAFT
43/ ROLLER MEMBER (FIRST ROLLER ELEMENT)
45/ ROLLER MEMBER (SECOND ROLLER ELEMENT)

## Claims

1. A torsional vibration damping device comprising:
a first rotary member; a second rotary member provided on the same axis as the first rotary member; at least one elastic member which is provided between the first rotary member and the second rotary member and, when the first rotary member and the second rotary member rotates relative to each other, is elastically deformed in a circumferential direction of the first rotary member;
a cam member which is provided on the first rotary member and rotates integrally with the first rotary member;
a torque transmission member which is provided rotatably on the second rotary member and in which an end portion thereof contacts a cam surface of the cam member while the other end portion is urged by the elastic member so that, when the first rotary member and the second rotary member rotate relative to each other, the elastic member is elastically deformed so as to transmit rotational torque between the first rotary member and the second rotary member; and
a holding member which is interposed between the other end portion of the torque transmission member and the elastic member and holds the end portion of the torque transmission member side of the elastic member, wherein the contact surface of the holding member which contacts the other end portion of the torque transmission member is configured of a tapered face inclined relative to the circumferential direction of the first rotary member.

2. The torsional vibration damping device according to claim 1, wherein the tapered face of the holding member has a predetermined curvature.

3. The torsional vibration damping device according to claim 2, wherein the tapered face is configured so that the predetermined curvature is set such that the curvature increases from outward in the radius direction of the first rotary member to inward in the radius direction.

4. The torsional vibration damping device according to any one of claims 1 through 3, wherein a first roller element which contacts the cam surface of the cam member is provided rotatably at an end portion of the torque transmission member and a second roller element which contacts the tapered face of the holding member is provided rotatably at the other end portion of the torque transmission member.

5. The torsional vibration damping device according to any one of claims 1 through 4, wherein the first rotary member includes the cam member on the outer periphery and a boss member to which an input shaft of a driving power transmission system is connected on the inner periphery;
the second rotary members includes a pair of disk plates which are arranged on both sides in the axial direction of the second rotary member and are fixed to each other with a predetermined gap in the axial direction so as to transmit the rotational torque of an internal combustion engine;
the torque transmission member is constituted of an arm member provided rotatably on the rotary shaft which connects the pair of the disk plates to each other; and
an accommodating hole for accommodating the elastic member and the holding members is formed in each of the pair of the disk plates.

6. The torsional vibration damping device according to claim 5, wherein the accommodating hole is accommodated in the accommodating hole which is curved along the circumferential direction of the first rotary member and the elastic member is constituted of a coil spring which is curved along the accommodating hole in a natural condition.
